# EUROPEAN PATENT SPECIFICATION

(11) **EP 2 223 558 B1**
(45) Date of publication and mention of the grant of the patent: **11.05.2011**
(21) Application number: 08845760.1
(22) Date of filing: 29.10.2008
(51) Int. Cl.: H04W 36/08, H04L 29/08

(54) **COMMUNICATION SYSTEM FOR MOBILE TERMINALS WITH MULTICHANNEL WIRELESS ACCESS**
KOMMUNIKATIONSSYSTEM FÜR MOBILE ENDGERÄTE MIT DRAHTLOSEM MEHRKANAL-ZUGANG
SYSTÈME DE COMMUNICATION POUR DES TERMINAUX MOBILES AVEC UN ACCÈS SANS FIL MULTICANAL

(30) Priority: 29.10.2007 IT RA20070067
(43) Date of publication of application: 01.09.2010
(73) Proprietor: Bluendo Srl, 10128 Torino (IT)
(72) Inventor: MALGAROLI, Alessandro, I-10139 Torino (IT); FORNO, Fabio, I-13885 Salussola (BI) (IT); CAROTTI, Elias Sebastiano Giuseppe, I-08100 Nuoro (IT)
(74) Representative: Grünecker, Kinkeldey, Stockmair & Schwanhäusser Anwaltssozietät
(86) International application number: PCT/IB2008/003764
(87) International publication number: WO 2009/056989

(56) References cited:
- WO-A-02/32159
- WO-A-2007/048063
- US-A1- 2002 085 719
- US-A1- 2006 187 943
- SPARKS DYNAMICSOFT R: "Establishing jabber Messaging Sessions with the Session Initiation Protocol draft-sparks-simple-jabber-sessions-00; draft-sparks-simple-jabber-sessions-00.txt " IETF STANDARD-WORKING-DRAFT, INTERNET ENGINEERING TASK FORCE, IETF, CH, 27 October 2002 (2002-10-27), XP015005349 ISSN: 0000-0004

## Description

### FIELD OF THE INVENTION

The present invention relates to a communication system between mobile devices and fixed network or between mobile devices only, wherein the mobile devices can use different wireless communication technologies. In particular, the present invention relates to a communication system which enables a transparent migration of application sessions managing at the same time the continuity of the transmitted data within the session and assuring the proper delivery of each transmitted package.

### DESCRIPTION OF THE PRIOR ART

In the last years a number of technologies have been developed in order to obtain wireless communication between mobile communication devices and fixed networks, such as for example the GSM, GPRS or 3G technologies or the Wi-Fi networks. Bluetooth technology itself has been developed in order to allow the exchange of information between devices such as palms, mobile phones, personal computer laptops, printers, digital cameras etc. Examples of communication systems can be found in US 2002/085719 A1, US 2006/187943 A1, WO 02/32 559 A and WO 2007/048063 A.

The actual mobile communication devices are provided with communication channels using different technologies; said communication channels can generally work simultaneously on the same device. For example a mobile phone can exchange data with another mobile using a 2-3G net and simultaneously communicating using the Bluetooth technology with a palm. The exchange of data follows different protocols in the different technologies.

A common problem for these technologies is how to associate to each mobile device an address which allows the recognition and location of a certain device. Some of these technologies, as for example the Wi-Fi nets use the IP addressing while other technologies use addressing schemes which are related to the technology itself and to the topology of the local network These network technologies also comprise short range communication technologies such as Bluetooth and Zigbee. These technologies, because of the tack of an addressing system and of global routing, allow communication only with devices which are in the close proximity, but they do not allow the communication with remote devices or services.

The differences between the protocols and the addressing techniques makes problematic the migration of application sessions between different communication channels keeping the communication active. The term "session" is defined as a sequence of operations performed in a limited time between a user identified by a particular ID and a remote service or between two agents or software services. This sequence of operations can be independent from the devices or from the employed communication channels, which can vary during the session itself. The concept of migration between channels is generally expressed with the term "handover".

For example, a user can begin a series of transactions with a server using a GPRS connection and when he reaches a zone covered by Wi-Fi can continue the interaction with the server within the same session but using the Wi-Fi channel, which is less expensive. The problem of the migration is present also in this mentioned case, even if the migration takes place between technologies which both use an IP addressing. In fact, generally two different IP addresses depending on the channel which is used, are given to a mobile device which can communicate using a GPRS connection or a Wi-Fi connection.

Another type of migration is possible between different devices. For example, a user can request information through his own mobile phone and receive the answer on a high-definition monitor which is close to the user himself.

The migration problem is also present when a mobile device is moving, changing the access point without changing the communication channel. In this case, a different IP address, which depends on the network and on the architecture of the local network, is assigned to the device. This can involve a frequent change of the IP address. This problem is generally solved by recording the IP address of the mobile device in one or more known centralized servers so that the address is known. An example of protocol which implements this solution is mobile IP (http://tools.ietf.org/html/rfc3344), which allows to migrate the IP address while moving, using a known server. Nevertheless, similarly to other solutions of this kind, mobile IP delegates the integrity of the transmitted data to other protocols at the transport or application level, as it does not manage the transition phase from one network to another one, as well as the period when the device has no connectivity.

A further problem related to the allocation of IP addresses of mobile devices regards the diffusion of Network Address Translation techniques which are directed to the use of addresses of private type. Said private addresses limit the occupation of the public addresses, but they do not allow the direct contact of the device by external public addresses. This does not allow the "push" of data to a device which is provided with a private address, except when using particular services provided by the administrator of the private network. The possible solutions known from the state of the art are based on a continuous polling of the possible information sources or the maintenance of an open connection from the mobile device through which data can be sent when available. Unfortunately, these solutions involve an excessive use of the band, are not stable in case of disconnection, and they consume the battery of the mobile device.

There is therefore a need for a communication system which allows transparent migration between different wireless technologies using a homogeneous addressing system in the different technologies. Furthermore, there is the need that the mentioned system can be realized without modifying the mobile devices and the existing network infrastructure, therefore without the need to collaborate with mobile device producers or network administrators.

### SUMMARY OF THE INVENTION

The present invention relates to a communication system which comprises mobile devices, access points and servers wherein the mobile devices communicate with each other using wireless technology and wherein they connect to each other through access points or directly with the server. The communication system according to the present invention allows for the maintenance of a connection through a virtual channel that is an end-to-end communication channel with uniform characteristics which are independent from the physical channel which is used.

According to a first embodiment, the present invention relates to a telecommunication system comprising one or more servers, one or more access points and one or more communication mobile devices, wherein the mobile devices communicate using a wireless connection; a virtual communication channel is established between at least one server and at least one mobile device and the access points comprise a plurality of receiving units, wherein each unit is used to receive a different type of wireless communication. The system is characterized in that a unique identification number (UID) is associated with each user who uses a mobile device and a unique identification number (SID) is associated with the virtual channel which enables keeping the virtual channel active in the case of migration.

According to an embodiment of the present invention the access points update a list which associate the SID with the physical address of the mobile devices which are in the close proximity.

According to an embodiment of the present invention the servers associate the user unique identification number (UID) to the SID of the virtual channels and to the list of access points which manage a particular mobile device.

According to an embodiment of the present invention, the identification number of the user (UID) does not change if the user who is using a mobile device changes the access point with which he is communicating and/or he changes the type of wireless connection.

According to an embodiment of the present invention, the virtual channel remains active when the mobile device changes the type of wireless communication technology with the access point so keeping the associated SID unchanged.

According to a further embodiment of the present invention, the transport of the data is performed through the exchange of messages.

According to a further embodiment of the present invention a plurality of sections associated with the same user identification (UID) on different virtual channels (SID) can be run.

According to a further embodiment of the present invention, the identification number of the virtual channel (SID) is valid until it is explicitly terminated by the client or the server.

According to a further embodiment of the present invention, the access point forwards the messages coming from the mobile devices to the servers.

According to a further embodiment of the present invention, the server manages the sessions and the delivery of the data, it identifies the user, it records on a buffer the messages directed to the mobile devices which are not reachable and it adapts the format of the messages to the channel and to the mobile device which is used.

According to a further embodiment of the present invention, during the set of the communication channel between mobile devices and access point, the access point has to search for mobile devices which are eventually in the close proximity.

According to a further embodiment of the present invention, the setup of the communication channel takes place through an Inquiry operation in the case that the Bluetooth protocol is used.

According to a further embodiment of the present invention, each receiving unit comprises a firmware which is specific for the type of wireless data which are received.

According to a further embodiment of the present invention, different sessions associated to the same user identification number (UID) are managed on different virtual channels (SID).

According to a further embodiment of the present invention, the system is used as an instant messaging system for mobile devices with different wireless technologies.

According to a further embodiment of the present invention, a XMPP session is associated to the virtual channel.

According to a further embodiment of the present invention, the system is used as distribution of multimedia data for mobile devices with different wireless technologies.

According to a further embodiment of the present invention, the server sends multimedia data updates to the client of the mobile device as soon as these are available.

According to a further embodiment of the present invention, the server sends the multimedia contents depending on the type of communication virtual channel which is established with the client of the mobile device.

According to a further embodiment of the present invention, the system provides services in the ASP (Application Service Provider) mode on the communication virtual channel at the application level.

According to a further embodiment of the present invention, the access point recognizes the user identification number (UID) and it provides to communicate on the virtual channel local services which can be used by the user.

According to a further embodiment of the present invention, the server communicates on the virtual channel local or remote services which can be used by the user.

According to a further embodiment of the present invention, the server obtains from the position of the access point the position of the user of the mobile device and sends to the mobile device contents which are related to its position.

According to a further embodiment of the present invention, the access point associates OBEX messages to a virtual channel and using OBEX sends multimedia contents which are generated by the server and which are addressed to a particular UID.

According to a further embodiment of the present invention, the connections are performed using an end to end cryptographic protocol for the single messages.

According to a further embodiment of the present invention, the server compresses the messages before sending them and/or it uses a form of binary codification.

According to a further embodiment of the present invention, a unique identification number called Jabber ID (JID) is associated to each node.

According to a further embodiment of the present invention, a node can be a client, a server or a service which is present on the server.

These and other objects and advantages are provided by a system according to claim 1. Preferred embodiments are defined in the dependent claims.

### BRIEF DESCRIPTION OF THE DRAWINGS

Further advantages, objectives and characteristics of the present invention will become more clear in the following detailed description with reference to the enclosed figures of several embodiments of the present invention; in the enclosed figures identical or corresponding parts are identified by the same reference numbers.

In particular, in the figures:
- Figure 1 schematically represents an embodiment of the communication system according to the present invention;
- Figure 2 schematically represents an embodiment of the communication system according to the present invention in which a uniform logical channel between the user and the server is established;
- -Figure 3 schematically represents an embodiment of the structure of an access point according to the present invention;
- -Figure 4 schematically represents the structure of a transport message according to the present invention;
- -Figure 5 schematically represents an embodiment of the communication system according to the present invention wherein a XMPP server has been integrated;
- -Figure 6 schematically represents an exchange of messages between a mobile terminal, an access point and a server according to an embodiment of the present invention;
- -Figure 7 schematically represents an exchange of messages between a mobile terminal, an access point and a server according to an embodiment of the present invention;
- -Figure 8 schematically represents an exchange of messages between a mobile terminal, an access point and a server according to an embodiment of the present invention;

### DETAILED DESCRIPTION OF THE INVENTION

Even if the present invention is described with reference to the embodiment depicted in the enclosed drawings, it should be noted that the present invention is not limited to the particular embodiments described in the following detailed description and depicted in the drawings, but rather that the described embodiments simply exemplify different aspects of the present invention, whose scope is defined by the claims.

Further modifications and variations of the present invention will be clear to the skilled person by reading the description. The present description should therefore be considered comprehensive of all said modifications and/or variations of the present invention, whose scope is defined by the claim.

In general the present invention relates to a communication system between mobile devices and a fixed network or between the mobile devices themselves. In particular, the present invention relates to a heterogeneous communication system where the mobile devices use different wireless communication technologies, which might or might not be based on the IP protocol. More in detail, the present invention relates to a communication system which allows the establishment, in a transparent way for the user, of a virtual channel in which it is possible to perform work sessions for mobile terminals, which can migrate between different wireless communication technologies or which can move between different access points or which can transfer the session itself to other devices.

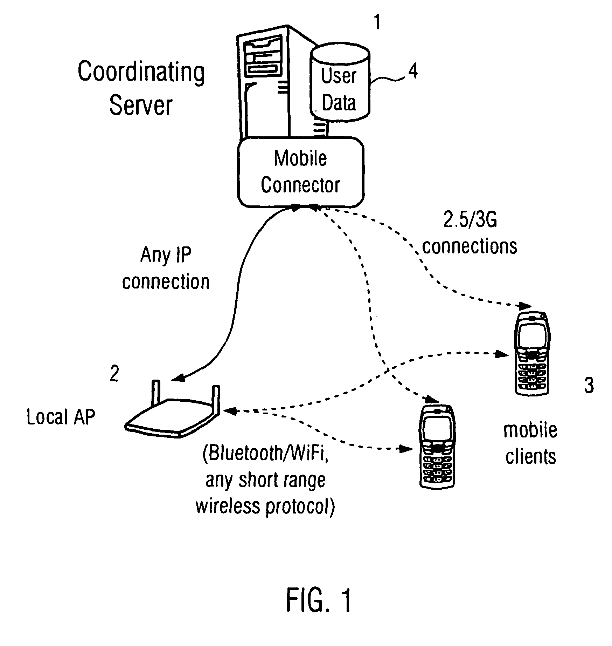

In a particular embodiment according to the present invention, the communication system comprises three parts as shown in Figure 1: a system of servers (1), a system of access points (indicated also as "access point" in the rest of the description) (2) and a system of mobile devices (3).

The virtual channel is located in the protocol stack ISO/OSI between the transport level (if it is present, otherwise, it provides similar characteristics in the channels where only the network level 3 or the data link level 2 are present) and the application level offering, with respect to TCP/IP, additional functionalities in the mobile environment, which allows to establish at any time a bidirectional communication between any couple of nodes in a way which is independent from their network address and from the type of the connection which is used. The virtual channel remains active even during migration, that means in the case that the mobile device changes connection with the access point (for example going from a Bluetooth connection to a Wi-Fi connection), or the connection move from an access point to another one (with the consequent change of network address) or the connection goes only through the IP network (wired or wireless) or also one of the end points of the channel is migrated from a mobile device to another one. The access point is encharged to maintain active the virtual channel between the server and the mobile terminal, choosing every time the most suitable wireless communication channel adapting the service characteristics and the reliability to the requests from the virtual channel, as well as redirecting the data from and to non IP networks (for example Bluetooth and ZigBee do not perform native support of the IP protocol).

The communication between two mobile devices is possible because the communication system assigns to each user an alphanumerical identification number (in the following called UID), which remains unchanged during the time and it does not depend on the network or physical address of the device which is used. Furthermore, a unique identification number (SID) is associated to each virtual channel. The access points update the list which maps the SID with the physical address of the mobile devices which are located in the close proximity, while the servers associate the unique identification number of the users (UID) with the SID of the virtual channels and with the list of the access points which manage a particular mobile device. Therefore, the central server is able to perform the correct routing of the exchanged data through the access points. The access points of the system allow to adapt the last part of the virtual channel to the characteristics of the wireless protocol which is used, offering uniform service characteristics and associating the physical address of the devices which are connected to the end point of the virtual channel and eventually saving in a buffer memory the data in case of a temporary disconnection. Moreover, the access points allow the server to keep updated the routing lists of the virtual channels, communicating at every time any variation of the SID associated to the devices within their action ranges.

Figure 1 shows an example of the communication system according to the present invention where the mobile devices (3) communicate with an access point (2) through wireless connections such as Bluetooth, Wi-Fi or any other type of connection with a short range. In some particular embodiments according to the present invention, the mobile devices (3) can directly communicate with the server (1) without passing through the access point (2), using 2-3 G connections. The access point (2) is then connected to the server (1) through IP connections or through ad *hoc* wireless networks.

The system of servers (1) comprises one or more centralized servers, on which a software is installed which allows the managing of the communication system. The system of servers comprises one or more database (4) on which the relevant data of the different users of the system are recorded as well as the information regarding the virtual channels which are opened and the relative routing lists. Every virtual channel is identified by a random number (SID) which is unique within the system for the entire of the channel itself and it is associated in a unique way to a user (UID) when the channel is created. While the UID allows to identify at every time in a unique way the addressee of the message or of a data package, the SID indicates from time to time the necessary information for its delivery.

Therefore the server creates the sessions on request of the client who wants to be part of the system and it performs the correct routing of the messages.

During the initialization phase of a session, the server generates a SID which has to be associated to the new established channel and it authentifies the client through a standard mechanism asking the UID to the user and verifying the credentials on its own database. The routing list which associates the active UID with the SID is updated every time that a channel is created or destroyed (logout operation of the client or time out of the connection). Secondly, the server updates the list which associates each SID with the identification number of the last access point, which was connected with the relative client. Using these two routing lists every time that data arrive for a UID (from an external application or from another virtual channel), the server is able first to select the correct SID and subsequently to direct the data to the access point which is actually associated to the device.

The virtual channel is established by the communication system during the first connection of the client, independently if it happens through the IP network (for example 2/3 G network) or through an access point. In this second case, the access point transmits the packet between the client and the server as long as the set up phase is not finished and when it is finished, a SID is assigned to the channel. In the case where an access point is involved, all the set up phase (which is made, however, by a short exchange of messages) has to take place without migrations as, at this point, a virtual channel does not yet exist.

During this phase, the authentication of the user is performed, which can be performed by any standard mechanism: in systems with low security requirement, it can be performed by sending a packet containing user name (UID)/password, while if a higher security level is necessary challenge-response authentication mechanisms or mechanisms based on certificates can be employed. In particular, it is possible to perform any authentication scheme described in Simple Authentication and Security Layer (the http://asg.web.cmu.edu/sasl).

Furthermore, the system takes care of delivering the data according to the requests of the different users and of recording in a buffer memory the messages which are directed to users who are not reachable when the data are sent or for whom there is no virtual channel active, that is the user is not connected through any device. Due to the collaboration between the access points, the system of servers is able to recognize the device and the connection channel and therefore can adapt the format of the messages optimizing many parameters as for example the connection costs. For example, if the user is connected through a free Wi-Fi channel, he can receive a message with the addition of multimedia contents, while if he is only connected by a mobile phone through the 2/3G network, he can decide to receive the message only as text and compressed.

Furthermore, the system of the servers in cooperation with the access points manages the presence of the users, that means the collection of state information which characterizes a particular connection. Moreover, it is possible to add data such as "moods" and "avatar" to the typical information of a system for instant messaging, such as if the user can be reached or not, position of the mobile devices (in a direct way through push from the client if he is provided with a GPS receiver or in an indirect way through the information of the position of the access point which is used), type and configuration of the hardware and software of the mobile devices and used channel etc.

The system of access points comprises one or more access points (2) which are connected following the IP protocol to the system of servers and which communicate with the mobile devices through different wireless technologies for example Bluetooth, Wi-Fi or other technologies.

The functions of the access point are the following: identification of the mobile devices which are present within the action range and selection of the devices which support the described protocol and the communication system of the present invention; 1- managing of the initialization phase of the virtual channel if it is the first connection of the device; 2- receiving of signals of different wireless technologies and adapting of these signals also through software type transformations, to make uniform the characteristics of the virtual communication channel in each of its parts (for example formatting of the packets, fragmentation/defragmentation, retransmission, reordering); 3-buffering of the data when the mobile device is not immediately reachable.

The firmware of the access points takes care of identifying the mobile devices which are in the close proximity, to communicate its own presence and to manage the sessions which are opened with the server. In practice, said software takes care in cooperation with the server of the starting of the session, of the data exchange in both directions during the session, of the migration and of the closing.

In more detail, the operations that are performed by an access point comprise:
- search of the mobile devices which support the communication system described which are present within its action range. In a particular embodiment wherein the wireless communication is performed using Bluetooth technology, the operation consists in the Inquiry phase (search of the devices in the close proximity, finding of their address, the MAC address) and subsequently in the Service Discovery Phase (SDP) for each device, that is investigating which applications are supported by the mobile devices so that it is possible to select which of them can become part of the system;
- selection of the protocol or of the communication profiles and of their parameters which are more suited for the communication with the identified device since short range wireless protocols often support different communication modes. In a particular embodiment wherein for example Bluetooth technology is applied, it is possible to select the RFCOMM profile (emulation of the reliable serial channel) and one has to find out its maximum transmission unit (MTU) in order to fragment in a correct way the exchanged messages;

- the access point connects with the device, which always sends a data packet to the server. Said packet allows the access point to identify the virtual channel (SID) and to build step by step a corresponding list between the SID and the physical addresses of the devices. In this way, the access point can correctly direct the packets every time that data come on a virtual channel. In a particular embodiment wherein Bluetooth technology is employed, the process is reduced to a connect of the access point and to a transmission of data packets by the mobile device;
- the access point sends the packet to the server through an IP connection which has to redirect it to the destination and it also has to update its own addressing list recording the access point which is managing the specific virtual channel;
- the access point can disconnect from the client any time in order to optimize the communication with other clients. In particular embodiments which for example employ Bluetooth technology, there are some limitations to the maximum number of connections which can be active simultaneously for each device, which corresponds to 7;
- when the server has data which should be sent to a particular device, it sends the data to the access point which manages the virtual channel, which provides to open a connection with the client if necessary and to send the packet;
- during the passage between IP network and wireless channel or *vice versa,* the access point performs all the necessary format conversion of the data, the fragmentation or defragmentation of the packets if required by the channel as well as eventually retransmission in case of error or detection of duplicates;
- if a client is temporarily not available or if the communication is too slow, the access point provides to buffer the packets as long as they are not delivered;
- during the data exchange with the access point, the software which is present on the mobile device also finds out in a direct way the physical address of the access points, which are in close proximity, so that it can start a connection in an autonomous way every time that it has data to send without having to wait for the access point. This option is needed because the discovery Phase (Inventory for Bluetooth) can require a high consumption of energy for the mobile device therefore limiting its autonomy.

A particular case is the first connection which is performed with the client when the virtual channel does not exist. Said connection can be performed directly by the client through a IP network or through an access point. In both cases, a short exchange of messages comprising three phases takes place:
- first message from the client wherein it is requested to create a session and in which the client presents its own UID:
- answer from the server which selects a valid SID from this moment on for each exchanged message;
- validation of the communication channel through an authentication handshake using any standard mechanism.

If these three phases are performed through an access point, there cannot be migration and the access point has to keep the channel connected with the server over the IP network and the wireless channel with the client until the end of the authentication.

According to the described scheme, the server can have, at any time, different possibilities on how to send a data packet to the client over the virtual network which can be simultaneously opened with more access points or through the 2/3G network. In this case, the mobile connector (12) selects the most suited channel on the basis of the preferences of the user and on the basis of his present state, managing eventually retransmission in the case of missed delivery. Said mobile connector comprises a module which, in the case of a plurality of connections having the same session ID can select the most suited connection on the basis of certain parameters which have to be optimized such as, for example, the connection costs.

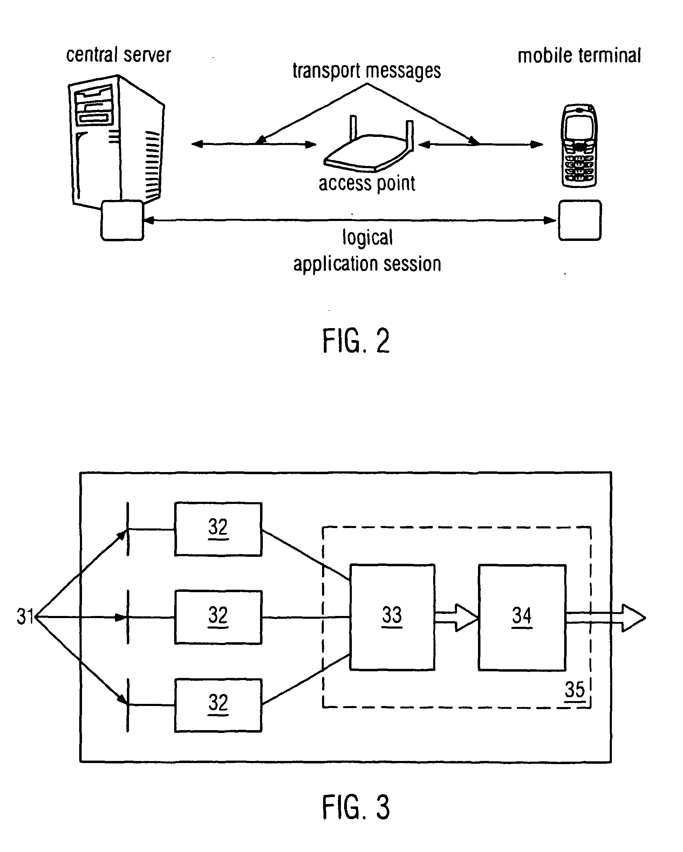

Figure 3 shows an example of the structure of the access point according to an embodiment of the present invention. The access point comprises a plurality of receiving units (31) which are suited to receive the signals from different wireless technologies. The signals which are received are processed by a firmware unit (32) which transforms the signals from the physical layer to the link layer by extracting the encoded data packets. The output packets of the firmware unit (32) are subsequently processed by transformation means (33) which adapt the service characteristics of the wireless physical channel to the virtual channel (reformatting of the packets, reliability through retransmission and reorder of the packets, fragmentation, etc). The transformation means are represented by software but in some particular embodiments of the present invention they can comprise either software elements or hardware elements. The output data of the access point are processed by conversion means (34) which convert the data in a format suited for the IP protocol in order transmit or receive the data to the server or from the server, eventually buffering the data when the mobile terminal is not immediately reachable. The conversion means (34) are represented by software but in some particular embodiments of the present invention they can comprise both software and hardware elements. In further embodiments according to the present invention, the access point comprises also the logic unit (35). In an embodiment of the present invention, the transformation elements (33) and the conversion elements (34) are part of the logic unit (35).

The system of the mobile devices comprises one or more mobile devices which are provided with the software which is necessary in order to communicate with the access points using the short range wireless communication technologies which are available to the devices. In particular the devices are able to: announce their presence within the action range and connect to the access points according to the typical scheme of each wireless protocol which is used; communicate that they support the creation of virtual channels according to the described protocol; accept connections from the access points and exchange data on these channels. As an example, in Bluetooth technology, the clients support the Inquiry protocol, the SDP (Service Discovery Protocol) protocol and a communication channel RFCOMM, through which the access points can find the mobile devices, identify the mobile devices which support the correct protocol stack and open a connection.

According to the present invention a unique identification number (UID) is associated to each user within the system which can be used by other users in order to send data independently from the device which is used for the connection and from the physical address.

According to an embodiment of the present invention, the communication system can operate both on communication channels which offer native support of IP connectivity (eg. Wi-Fi), and on channels which do not offer IP connectivity, as Bluetooth. The software of the access point can transform for the IP network the packets transmitted in the wireless channel independently from the transport protocol used to send the data from the mobile device to the access point.

According to a particular embodiment of the present invention, the mobile device can directly access the IP network for example through the GPRS connection and it can directly connect to the system of servers communicating using the same application protocol which is also used with the access point. In this way, it is possible to maintain and migrate the sessions even when no access point is available but only the IP connectivity offered by the provider of the network.

According to the present invention, an "end to end" virtual connection is established at logical level between the mobile terminal and the server as if the communication would take place on a unique uniform channel while at the physical level the connection is divided into two different and heterogeneous channels wherein the access point works as an adapter between them as shown in Figure 2.

in a particular embodiment according to the present invention, the server is provided with a mobile connector, that is a module which, in case of a plurality of connections having the same session ID, is able to select the most suited connection on the basis of certain parameters which have to be optimized, as for example the connection costs. In a particular embodiment, the server compresses the message before it is sent. In a further particular embodiment said server employs a binary encoding instead of a textual encoding in order to save part of the band.

The exchange of information between elements of the communication system is based on data packets which are exchanged within the virtual channel between the mobile terminal, the access point and the mobile connector on the server. In a particular embodiment according to the present invention, the mobile device is connected through a local link with the access point and the packets flow from the mobile device to the mobile connector on the server through the access point. In a further particular embodiment according to the present invention, if no access point is available, the mobile terminal can directly communicate with the mobile connector on the server using the data connections which are natively offered from the mobile phone network; the mobile connector on the server represents an access point for the client of the device with which he communicates through a different transmitting channel.

The packets which are exchanged on the virtual channel between the elements of the system are also called "transport messages" and they have the scope to ensure the correct delivery, that is to associate the data to the correct channel, to detect the loss, to maintain the order or avoid duplications, to allow eventually fragmentation and recombination during the path and to transport the data of the application, which are also called payload.

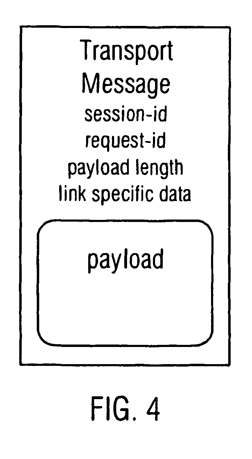

A transport message is formed by a series of headers which describe the format of the message and from the true data (payload) as shown in Figure 4. In a particular embodiment according to the present invention, the transport message comprises the following headers: a session id (SID), which associates the data to a particular data channel; a request id (RID) which is a progressive number (selected from an initial random number which is sufficiently high in order to avoid that it can be guessed) which ensures the correct delivery of the messages (order, loss, duplication); the length of the transported payload; other optional headers in order to transport characteristic information of the single communication channels. The headers can be encoded by a binary fixed fields encoding or by a textual encoding of the type of HTTP headers or using other known encoding methods.

The transported data (the payload) can have an arbitrary format and length. A sufficiently short length (few hundreds of bytes, some kbytes) is advisable in order to optimize the use of the wireless channels with the limited band such as the mobile phone networks 2G or the Bluetooth links. A possible encoding of the data is given by documents or fragments of XML document, as it is particularly versatile and expandable.

In a particular embodiment according to the present invention, the access point which is fundamental in the exchange of messages perform the following functions during the communication:
1. continuously searching within its own action range terminals which needs to communicate, using low level mechanisms which are supported by the wireless channels which are used. In a particular embodiment where Bluetooth technology is employed, the access point continuously performs "inquiry" and "service discovery" operations in order to identify the mobile terminals with the installed and active client.
   In some embodiments it is possible that other wireless protocol do not support in a native way discovery mechanisms of the mentioned type, in this case it is necessary the cooperation of the mobile terminal at an application level using known discovery mechanisms (for example UpnP, Zeroconf) or *ad hoc* defined the for the particular communication channel;
2. every time that a mobile terminal is identified, the access point tries to connect. After the first connection, the frequency of the connections and the type of the event which cause the connection are determined by the parameters of the applications. Said parameters can be static or dynamic and they can be negotiated between terminal and access point. Furthermore, after the first connection, the terminal gets to know the access point, thus the client can decide to start connections in an autonomous way, as soon as it has messages to send. In any case, the exchange of messages always follows the same procedures which are described in the following points independently by whoever has started the connections;
3. if there is no active application session (it is the first connection of this client with any access point), the phase of the creation of the section and of the negotiation of its parameters is started. The session is negotiated directly with the server, while the access point just delivers the messages.
   The exchange of messages takes place according to the procedure described by the protocol in the subsequent steps with no particular cases. The only difference is that the transport message does not contain a "session id" which will be generated by the central server as a first response. From this moment on, any transferred message which is sent will contain the "session id" and the "request id";
4. during any connection the first to send a message is always the mobile terminal, the access point answers with a message only if it has data coming from the server which has to be sent to the client. The message is sent to the central server which processes it and sends an answer if necessary. Every access point has a cache with the last messages which have been sent by each mobile terminal in order to avoid overloading the server with too many double requests. Also the access point keeps a cache for the answer received by the server in the case that the client is not available when the message is received. In this way, if the client reconnects after a short time it can provide the answer directly without asking the server. In this way, the access point besides redirecting the messages also acts as a buffer between the short range wireless link and the IP connection overcoming the problem related with the continuous disconnections which are typical of short range networks when the users are moving;
5. every client can at most have sent one message for which he is awaiting an answer (with request id RID). If he sends the next message with request id RID+1, the server answers the message immediately with request id RID, even with the empty payload if necessary. Such answer message to each RID is always necessary as it is the only way to receive an acknowledgement from the server;
6. if the terminal has new outgoing messages while it is waiting for an answer to the transport messages RID and RID +1, it waits in order to not excessively complicate the state of the client and of the server.
7. at each connection, the client sends as a first message the last one which did not receive an answer (this is done because it has no way to find out if the message has reached the server, the request id will allow to find out duplicates eventually). This also allows to recreate the cache of the messages in the case of passage from access point to the other one;
8. when an answer is received, if the client has nothing to send and it does not have other messages which are waiting for an answer it sends an empty transport message in any case in order to keep the session open;
9. the access point can disconnect the connection at any time in order to be available for any other terminals if it is requested by the resources.
10. if transport messages with RID out of sequence are received (for example the couple RID and RID+n with n > 1 or RID-n and RID) this means that the client or the server have had problems during the application session and a resynchronization takes place creating a new session;
11. the application session is closed on request of the client or automatically by the server on the basis of parameter which have been agreed upon during the initial configuration (for example after a certain number of minutes without any activity).

In a particular embodiment of the present invention, the access point works only by redirecting the messages, transforming it from the short range wireless channel to the IP network, and as temporary cache, therefore the state of the virtual channel is completely comprised between the server and the client. In fact, client and server record the last messages which have been sent or received in a buffer with a configurable length (usually 2) so that it is possible to detect the duplicates which are received, packets out of order and resent packets which were lost. In particular, the buffer must be large enough to record in at least one of the endpoints all the transmitted packets which did not receive an acknowledgement.

This allows the client to perform a complete transparent handover between one access point and another access point and therefore, with the mobile phone network, which can be seen as a particular access point. As the client and the server have always recorded the complete state of the virtual channel, it is possible to change access point and connection channel at any moment without losing packets on the access points as these packets can be resent after the migration.

Said handover takes place without any particular expedient and it can happen between different wireless channels (for example between Wi-Fi and Bluetooth or between Bluetooth and Zigbee). If necessary, during the handover, the client can duplicate the sending of a message which, thanks to the request ID, is promptly identified and processed by the server.

The relative state of a transport message is recorded by the server as well as by the client and it comprises very limited number of information in order to meet the computational needs of the mobile terminals and server and also in order to simplify and make more stable the logic of the eventual retransmissions which are very probable in nomadic wireless environments.

In a particular embodiment according to the present invention wherein client and server can have at most one outgoing message without acknowledging, the recorded data which characterizes the state are the following:

The terminal records at most the last two messages (RID and RID+1) which have been sent and sends them at any new connection as long as it does not receive the response;

The server records for each terminal the last two received messages in order to avoid duplicates and the last message which has been sent in order to send it again if it is requested again.

In other embodiments according to the present invention, it is possible to record a larger number of messages on the server and on the terminal, increasing in this way the transmission window.

Thanks to the possibility to perform handovers, each client can have an application session simultaneously opened on a plurality of physical channels. In a particular embodiment the client can be connected through a mobile phone network to one or more access points. In this case, also the client and the server can select the physical channel on which each single message has to be sent on the base of predetermined parameters which have been agreed upon during the creation of the virtual channel or during the life of the channel by suited indications.

In a further embodiment according to the present invention, a group of access points which are geographically close to each other and which are connected in a network can coordinate in order to optimize the connection so as to distribute the load and eventually overcome limitations imposed by the protocol which is used for the local link (for example Bluetooth requires strict limitations on the maximum number of simultaneous connections).

In a particular embodiment according to the present invention, the communication system allows to create a virtual channel from a central server to mobile terminals which access the network through heterogeneous wireless channels. Said channel is based on the exchange of messages and it has properties for the delivery of messages which are similar to the one of the TCP channel: delivery guarantee, correct order, integrity, complete bidirectionality.

Any application which requires a communication substrate characterized by one or more of said properties, can employ the system which has been described. In a particular embodiment according to the present invention it is possible to transport the messages using the XMPP (eXtensible Messaging and Presence Protocol). Said protocol provides the basic elements for an almost real time communication between nodes distributed in a network with bidirectional exchange of fragments of XML documents, independently from the IP address. The communication structure described by the protocol is based on a federation of servers to which the clients on PC or mobile terminals can connect. Every node, that is every client, server or service present on the server which is part of the network is characterized by a unique identification number called Jabber ID, which is composed similarly to an email by the user name and the address of the server where it is certified. This unique identification number caller Jabber ID allows to use an addressing scheme which is more versatile than the IP protocol and which can be used as UID within the system.

The federation of servers and the unique identification number of the nodes allow to construct a so-called overlay network which is a network abstracting from the complexity of the underlying IP network so as to allow a simple and efficient communication between the nodes which are part of the network. In the actual implementation, the necessary requirement in order to be part of the XMPP network is to have access to an IP connection which is stable. This requirement is not met either by the short range wireless network (for example Bluetooth and Zigbee do not provide IP connectivity) nor completely by the 2/3G connections of the mobile phone networks because the connections are subject to disconnections.

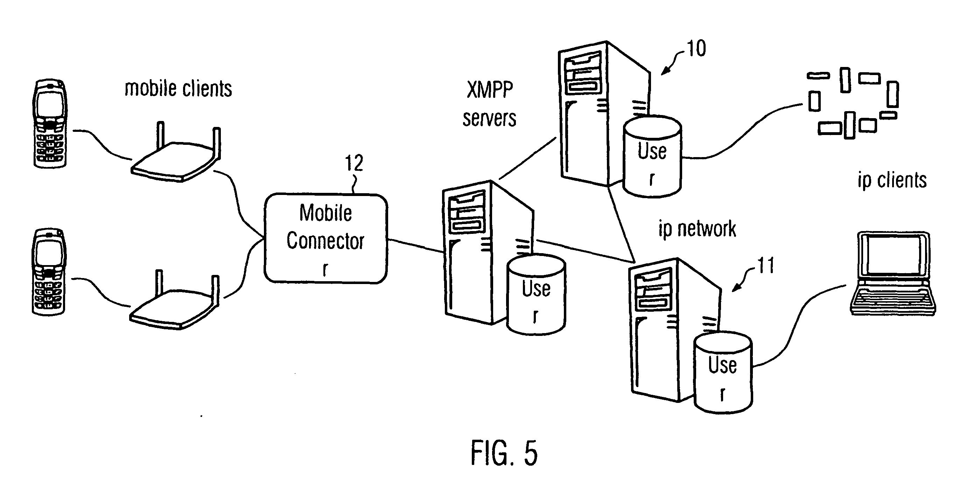

The proposed communication channel is therefore the best means towards XMPP mobile terminals, because it offers a substrate for the exchange of messages which is reliable also in the case that no IP network is available or that the IP network does not have the required reliability characteristics. In order to integrate the proposed channel with XMPP, it is sufficient to add the central server for the coordination of the connections, i.e. the mobile connector (12), to the XMPP server (10) as shown in Figure 5. In this particular embodiment, the Jabber ID corresponds to the UID which characterizes the user of the system which is unique and independent as the IP address. All the XMPP messages are sent in a transparent way to the mobile terminals and the mobile terminals can perform clients which are integrated with the XMPP network. The mobile connector (12) simply associates to each XMPP session of a Jabber ID a virtual channel which transports the transport message:
- It packages all the XMPP messages for mobile clients in suited transport messages, which have the required session ID and request ID;
- It extracts all the messages received from mobile terminals passing them to the XMPP server associated within the correct XMPP connection.

In this way, each mobile terminal can communicate with all the XMPP clients which are present in the network as if it were connected to the IP network. In a preferred embodiment, the XMPP server can manage a plurality of sessions associated to the Jabber ID (which coincides to the UID). In this case, the server has to choose between different SID associated to the same UID. This is a case where a user has more connections open simultaneously on different devices (for example desktop and mobile phone).

In a particular embodiment according to the present invention, the exchange of messages between the mobile terminal, the access point and the central server follows the procedures described below. In this embodiment, the communication between access point and mobile terminal takes place on a Bluetooth connection of the type RFCOMM and between access point and server through an IP connection. Similar cases to the one presented in the following are valid also for wireless technologies different from Bluetooth.

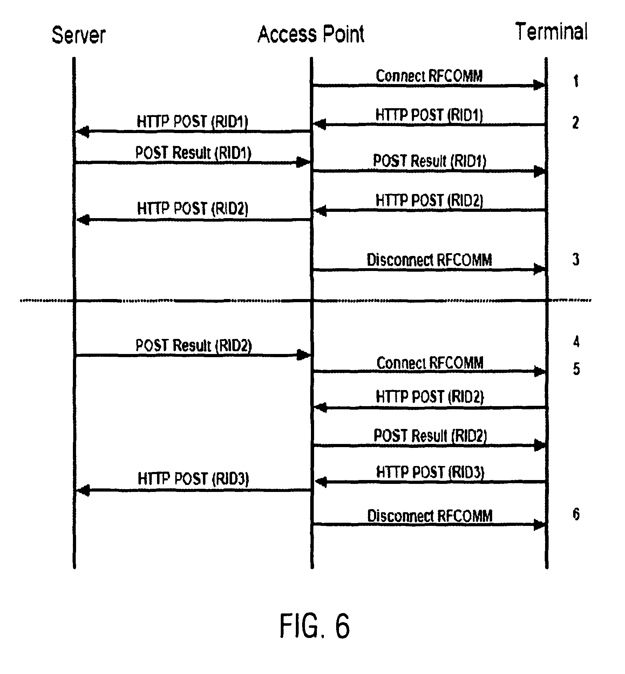

In a first case, the connection takes place between an access point and a terminal in two phases wherein the access point connects to the client as shown in Figure 6:
1. the access point identifies a terminal through Bluetooth inquiries; through SDP (Service Discovery Protocol) it finds out that it supports the messaging system and it opens a RFCOMM connection;
2. a normal exchange of messages starts with the server within a session which had been previously open. The terminal starts to send a transport message with request ID RID1 (there are no other outgoing messages and no other messages which are waiting for an answer). The access point sends the message to the server which answers through the access point;
3. the conversation continues till when after a time out without answer from the server (to the message with RID2), the access point disconnects the client;
4. the access point receives an answer from the server to the message with RID2;
5. the access point tries to connect to the client who corresponds to the session with the code RID2 and starts a new exchange of messages till the request RID3.

After a timeout without answers from the server, the access point closes the RFCOMM again in order to make free resources for the connection with other terminals.

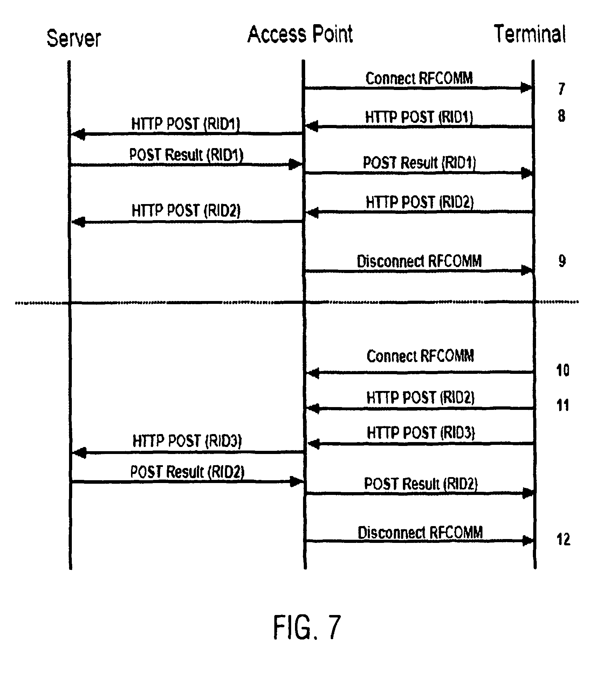

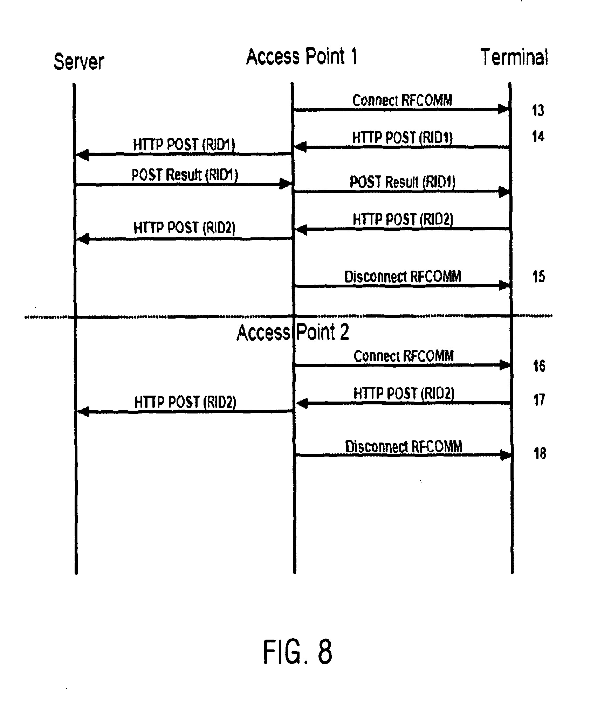

In a second case, with connection in two phases wherein the second one is started from the mobile terminal as shown in Figure 7:
7. as in previous point 1;
8. as in previous point 2;
9. as in previous point 3;
10. the client has to send a message (example: user input from the user) and therefore it tries to connect with the last access point with which it had interacted;
11. a new exchange of messages starts following the condition of the described protocol. The access point ignores the message with RID2 because it had already been sent to the server, while it sends the second message with RID3 because it is new. This last message causes the answer of the server which is sent to the client on the terminal;
12. after a time out, the access point decides to close the RFCOMM connection;
   in a third case, the connection is divided into two parts and the second interaction takes place with a different access point as shown in Figure 8:
13. as in previous point 1;
14. as in previous point 2;
15. as in previous point 3;
16. the terminal exits from the action range of the access point 1 and it enters in the action range of the access point 2 which opens a RFCOMM channel.
17. a normal exchange of messages starts and the client sends the last message without answer in accordance with the protocol. The access point 2 sees for the first time this message and sends it to the server which recognizes the duplicate through the request id. If the server has available data for the terminal, it could at this point send them on the new logic channel opened by the access point 2.

After a time out the access point 2 closes the connection.

In a particular embodiment the present invention can be used to realize an instant messaging system from and to the mobile terminals. The messaging system is a textual system but in some particular embodiments it can also relate to files of different types. Through the landline server, every mobile client can connect other mobile clients if he just knows the identification number within the system and he does not need to know the physical address. The sever records the messages when the recipients are offline or temporarily not available and it delivers the messages as soon as they are reachable. Similar to the traditional instant messaging systems, it can also deliver presence messages (state of the client) and multimedia content (file).

The devices can record the identification numbers of the other mobile terminals and organize elements such as address books or contact lists.

The local access points allow to use a low cost communication channel or a wider band communication channel.

Through the central server, it is possible to extend the messaging system to any client on the fixed network, putting into contact traditional clients and PC legacy with the client installed on a mobile terminal.

A particular embodiment according to the present invention comprises a system for the distribution of information and of multimedia contents.

A recent trend for the distribution of information and multimedia contents consists in the employment of RSS feed, that is the transfer of XML files which contain a structured description of the contents which are produced by a website. Said contents can be of different types as for example news, pictures, movies, audio files and besides the address for finding the indicated resource in the RSS, there are also data concerning author, brief description and publication data. The RSS documents are normally made available on HTTP and the clients who receive the information periodically control if there are new contents available by downloading a new version. This approach is not suited for mobile terminals because the continuous polling of the RSS file is relevant for the cost connections and for the duration of the battery life.

In a particular embodiment according to the present invention, it is possible to realize a RSS feed aggregator on a landline network and to use the messaging system according to the present invention in order to send updates only when they are effectively available without consuming bytes in an unnecessary polling from the side of the client. In a further embodiment of the present invention, the aggregator can furthermore through the central server know at any time which is the available channel for each client and select each time to send only the suitable multimedia contents (for example movies and pictures only when a low cost local link is available).

A further embodiment according to the present invention consists in the supply of services in the ASP (Application Service Provider) mode.

The system according to the present invention allows to establish a communication channel at the application level based on the exchange of messages wherein the communication can be started in an independent way both by the client or by the server (after the client has opened a session). As the basic transport element which is used (the message) is independent from the data that it transports, it is possible to deliver data which are more complex than the simple test messages. In particular, it is possible to include in a message a document in the XML format which describes a form or a data list which has to be visualized at the client and which has to be presented to the user. Each service provider can prepare or generate at runtime on its own network server a collection of XML documents which will be sent to the mobile client through the central server; through these documents, the user can interact with the application of the service provider using a paradigm which is equivalent to a form web. The user in fact will fill up on his own mobile terminal the form/document received and he will send it back to the service provider in a new message. Also the final confirmation response of the server will be a XML document similar to the form, containing structured data (table, lists,...) and which can be used for generic data reporting.

Using the present invention, a service provider can concentrate on the development of the application logic only on its own server and provide a wide range of heterogeneous services without having to adapt its services to the differences of the clients who are present on a plurality of typologies of mobile terminals and without having to care about the problems of wireless communications because the proposed system ensures a reliable communication which is low cost and secure.

The available services are visualized on the client as contacts in an address book and they can continuously updated (adding/deleting) by the central server.

The interaction with a service can be started by:
- the user selecting a service which is available in its own listings;
- the service provider in the case of delivery of notifications/alarms;
- the central server on the base of the needs of who is administrating the transport service.

A further embodiment according to the present invention consists in a georeferential system and in a system to provide services which use information connected to said georeferentiaton.

The presence of short range wireless local access points which are continuously communicating with the server, allows to localize with a satisfying accuracy the terminals provided with a client even if they do not have a positioning system as, for example, GPS. For example, the devices which communicate through Bluetooth technology have an action range of approximately 10 meters, that means a geographical area which is sufficiently limited in order to satisfy the precision requirements which are typical of commercial activity:
- information service related to the position of the user
- delivery services for georeferential advertising.

The user positioning system according to the present invention can be used in a completely independent way from GPS or in a complementary way. The GPS in fact cannot provide the precise position of the user, when he is inside a building, while the presence of one or more access points in the building allows to estimate the position of the terminal (which is associated to a particular user) with good precision. The transport system according to the present invention can therefore be used in order to provide other clients/services with the position of a device. In particular, the information regarding the position can be used in order to improve the presence information associated with each client and using it for the distribution of contents or events related to the position.

The central server can furthermore update the services which are present in the list based on the received position of the client, providing in this way only the suited services (or the ones that are available). This aspect creates an important advantage for mobile terminals with small screens and limited input because it allows to present to the user only the services which are relevant for his context. Furthermore, the automatic update of the available services speeds up and simplifies the interaction with the user because only the services which are relevant to the position of the user are selectable.

A further embodiment according to the present invention is a system of pervasive computing. The large number of available mobile devices with short range communication interfaces and the low cost of microcontroller allow in theory to build environments where the user can "communicate" with the objects which are present. The possible applications range from the control of tool machines to the interfacing of terminals with control units to the access to services related to a particular place (stations, airports, commercial centers, museums...).

The local access point according to the present invention allows to access in an automatic way all the local service categories which have been described above. According to a particular embodiment of the present invention, when a mobile terminal gets close to an access point, the access point recognizes the identification number of the user and in an autonomous way or in coordination with the central server it provides to notify the mobile terminal with the local services which can be used by the user. This can happen in automatic and not requested way (push of services) or after the explicit request of the user (service discovery). In a particular embodiment according to the present invention, the server updates a list on the base of the position of the mobile device; all the services which can be accessed by the user are recorded in said list.

Furthermore, according to the present invention, the user can interact with the services which have been found through the local connection using the client on his own mobile terminal, sending requests or exchanging data; the interaction can also continue remotely (for example remote control of devices, alarms) through the communication means that the system offers.

In a further embodiment according to the present invention, the interaction can be only local and the access point which offers the services cannot be connected to any coordination central server. This configuration has the advantage that it can offer services of general interest to anonymous users or it is convenient when it is necessary to control (only locally) devices which are in position which are difficult to reach or to cable. In this case, the credentials of the users authorized to perform operations can be recorded directly on the local access point.

Some short range communication channels follow privately owned communications schemes, which allows to exchange information in a way, which is difficult to reproduce outside the point to point link between access point and terminal. For example, Bluetooth technology offers mechanisms for the exchange of multimedia contents based on the OBEX protocol. OBEX does not have the concept of routing of the content because the receiver of the multimedia message, which is exchanged through OBEX, can only be the other endpoint of the Bluetooth communication. This makes in practice impossible to distribute at a distance multimedia contents using a OBEX exchange. Many mobile phones due to limitations imposed by the telephone manufacturers and providers can exchange multimedia contents with other mobile phones only through OBEX or MMS. The free communication is thus apparently limited only to short range.

In an embodiment according to the present invention, the access point performs all the privately owned operations of the communication channel as, for example, exchange of OBEX messages with the mobile terminal in an autonomous way. The access point then exchanges multimedia contents with the mobile phone associating them to the physical identification number of the terminal of the communication channel (for example, MAC address).

The access points also keep track of the correspondence between the identification number of the terminal within the virtual channel and the physical identification number of the terminal. Using this correspondence, it is possible to:
- if it receives files from the mobile terminal, it can communicate their receipt to the server and indicate which is the correct application session to which it should be associated;
- the server can perform a predefined action, as recording the files in an area which belongs to the user or send a message to the mobile terminal in which the instructions for managing the received files (for example the addresses of web mail or other, to whom they should be sent) are asked.

In conclusion, the system described by the present invention allows to employ a particular access point of the network to establish virtual communication channels between mobile devices and a server or between mobile devices and other mobile devices. The system allows to migrate in a transparent way the endpoints of the virtual channel between access points which are structurally homogenous but located in different position as well as between access points which are structurally heterogeneous or also between devices of different type. The described system ensures the continuity of the transmitted data within the virtual channel, ensuring that the transmitted packet is received in the right order and that duplicates are eventually deleted.

In a particular embodiment, the system can also ensure the integrity and privacy of the delivered data verifying in a secure way the identity at the ends of the channel and performing end-to-end encryption of the transmitted data. This is a very important characteristic of the present invention. In short range protocols, the security is very low. On the contrary, in the connections which are based on the IP protocol, it is possible to use protocols such as https and using secure connections verifying for example the identity of who is sending the message. In short range technologies as for example Bluetooth, this is not possible. The present invention, thanks to the structure at the application level which uses transport messages, allows to improve the security even in short range connections because every virtual channel is monitored and verified. In practice, it is possible to reach even for short range connections as for example Bluetooth, which have the advantage of being cheap, a level of security which is comparable with what it is guaranteed in a SSL protocol in an IP network, as for example GPRS, which has the disadvantage of being very expensive. The communication within each virtual channel is based on the exchange of messages, that is of data block of limited dimension which are independent from each other according to the REST (Representational State Transfer) logic, which is typical of distributed applications based on stateless protocols as HTTP. In a particular embodiment according to the present application, the position of the user is approximate with the position of a point of access.

Further modifications and variations of the present invention will appear clear to the skilled person from reading the present description. The present description has to be considered as comprehensive of all said modifications and/or variations of the present invention, whose scope is defined by the claims.

## Claims

1. Telecommunication system comprising one or more servers (1), one or more access points (2) and one or more communication mobile devices (3), wherein:
the mobile devices (3) communicate through a client using a wireless technology wherein the system is adapted to assign to each user who uses at least one of the mobile devices (3) a unique user identification number (UID), said unique user identification number being independent from the network and from the physical address of the mobile device (3) which is used;
a virtual communication channel is established between at least one server (1) and the mobile device (3) used by the user, wherein a unique virtual channel identification number (SID) is associated to said virtual channel and said virtual channel identification number (SID) is a random number unique within the system for the entire life of said virtual communication channel;
each of the access points (2) comprises a plurality of receiving units (31) wherein each unit (31) is used to receive a different type of wireless communication;
**characterized in that**:
each of the access points (2) is adapted to update a first table mapping the virtual channel identification number (SID) and the physical addresses of all the mobile devices (3) present within the action range of the access point (2);
the server (1) is adapted to update a second table associating the user identification number (UID) with the virtual channel identification number (SID) and with a list of access points having in their action ranges the mobile device (3) used by the user; and
the system is adapted to keep said virtual channel active in case of migration by means of said first and said second table.

2. A telecommunication system as claimed in claim 1, wherein the mobile devices (3) communicate with the access points (2) through a wireless connection and the access points (2) communicate with the server (1) through an IP connection.

3. A communication system claimed in claim 2, wherein the user identification number (UID) does not change if the user of a mobile device (3) changes the access point (2) with which he is communicating and/or changes the type of wireless connection.

4. A communication system as claimed in claim 2 wherein the virtual channel remains active when the mobile device (3) changes the type of communication wireless technology with the access point (2).

5. A communication system as claimed in claim 2 wherein the virtual channel remains active when the mobile device (3) changes the connection from an access point (2) to the connection with another access point (2).

6. A communication system as claimed in claim 1 wherein the virtual channel remains active when the communication changes from a mobile device (3) to another mobile device (3).

7. A telecommunication system as claimed in claim 1 wherein the transport of the data uses the exchange of messages.

8. A telecommunication system as claimed in claim 7 wherein the messages contain one or more headers and the data which have to be transmitted or received.

9. A telecommunication system as claimed in claim 7 wherein the messages contain the identification number of the virtual channel (SID) and identification number of the request (RID).

10. A telecommunication system as claimed in claim 7 wherein the messages contain the length of the message itself.

11. A telecommunication system as claimed in claim 7 wherein the messages contain the user identification number (UID) which generated them.

12. A telecommunication system as claimed in claim 1 wherein the access point (2) is provided with recording means which work as a buffer, on which the messages coming from the server (1) are recorded in the case that the mobile device (3) to which the messages are directed is not accessible.

13. A telecommunication system as claimed in one of claims 1 or 2 wherein the access points (2) comprise conversion means (34) which convert the data in a format which is suited for the IP protocol.

## Patentansprüche

1. Telekommunikationssystem, das einen oder mehrere Server (1), einen oder mehrere Zugangspunkt/e (2) sowie eine oder mehrere mobile Kommunikationseinrichtung/en (3) umfasst, wobei:
die mobilen Einrichtungen (3) über einen Client unter Verwendung einer Drahtlos-Technologie kommunizieren, das System so eingerichtet ist, dass es jedem Nutzer, der wenigstens eine der mobilen Einrichtungen (3) benutzt, eine eindeutige Benutzer-Kennungsnummer (UID) zuweist, und die eindeutige Benutzer-Kennungsnummer unabhängig von dem Netzwerk und von der physikalischen Adresse des mobilen Gerätes (3) ist, das verwendet wird;
ein virtueller Kommunikationskanal zwischen wenigstens einem Server (1) und dem von dem Benutzer verwendeten mobilen Gerät (3) hergestellt wird, dem virtuellen Kanal eine eindeutige Identifizierungsnummer des virtuellen Kanals (SID) zugewiesen wird und die Identifizierungsnummer des virtuellen Kanals (SID) eine Zufallszahl ist, die in dem System für die gesamte Lebensdauer des virtuellen Kommunikationskanals einzigartig ist;
jeder der Zugangspunkte (2) eine Vielzahl von Empfangseinheiten (31) umfasst und jede Einheit (31) verwendet wird, um einen anderen Typ von Drahtlos-Übertragung zu empfangen;
**dadurch gekennzeichnet, dass**
jeder der Zugangspunkte (2) so eingerichtet ist, dass er eine erste Tabelle aktualisiert, die die Identifizierungsnummer des virtuellen Kanals (SID) und die physikalischen Adressen aller mobilen Geräte (3) zuordnet, die innerhalb des Wirkungsbereiches des Zugangspunktes (2) vorhanden sind;
der Server (1) so eingerichtet ist, dass er eine zweite Tabelle aktualisiert, die die Benutzer-Identifizierungsnummer (UID) mit der Identifizierungsnummer des virtuellen Kanals (SID) und mit einer Liste von Zugangspunkten verknüpft, in deren Wirkungsbereichen sich das von dem Benutzer verwendete mobile Gerät (3) befindet; und
das System so eingerichtet ist, dass es den virtuellen Kanal bei Migration mittels der ersten und der zweiten Tabelle aktiv hält.

2. Telekommunikationssystem nach Anspruch 1, wobei die mobilen Geräte (3) mit den Zugangspunkten (2) über eine Drahtlos-Verbindung kommunizieren und die Zugangspunkte (2) mit dem Server (1) über eine IP-Verbindung kommunizieren.

3. Kommunikationssystem nach Anspruch 2, wobei sich die Benutzer-Kennungsnummer (UID) nicht ändert, wenn der Benutzer eines mobilen Gerätes (3) den Zugangspunkt (2) ändert, mit dem er kommuniziert, und/oder den Typ von Drahtlos-Verbindung ändert.

4. Kommunikationssystem nach Anspruch 2, wobei der virtuelle Kanals aktiv bleibt, wenn das mobile Gerät (3) den Typ von Kommunikations-Drahtlos-Technologie mit dem Zugangspunkt (2) ändert.

5. Kommunikationssystem nach Anspruch 2, wobei der virtuelle Kanal aktiv bleibt, wenn das mobile Gerät (3) die Verbindung von einem Zugangspunkt (2) zur Verbindung mit einem anderen Zugangspunkt (2) ändert.

6. Kommunikationssystem nach Anspruch 1, wobei der virtuelle Kanal aktiv bleibt, wenn sich die Kommunikation von einem mobilen Gerät (3) zu einem anderen mobilen Gerät (3) ändert.

7. Telekommunikationssystem nach Anspruch 1, wobei der Transport der Daten den Austausch von Nachrichten nutzt.

8. Telekommunikationssystem nach Anspruch 7, wobei die Nachrichten einen oder mehrere Header und die Daten enthalten, die gesendet oder empfangen werden sollen.

9. Telekommunikationssystem nach Anspruch 7, wobei die Nachrichten die Kennungsnummer des virtuellen Kanals (SID) und die Kennungsnummer der Anforderung (RID) enthalten.

10. Telekommunikationssystem nach Anspruch 7, wobei die Nachrichten die Länge der Nachricht selbst enthalten.

11. Telekommunikationssystem nach Anspruch 7, wobei die Nachrichten die Identifizierungsnummer (UID) des Benutzers enthalten, der sie erzeugt hat.

12. Telekommunikationssystem nach Anspruch 1, wobei der Zugangspunkt (2) mit einer Aufzeichnungseinrichtung versehen ist, die als ein Puffer arbeitet, in dem die von dem Server (1) kommenden Nachrichten aufgezeichnet werden, wenn die mobile Einrichtung (3), an die die Nachrichten gerichtet sind, nicht erreichbar ist.

13. Telekommunikationssystem nach einem der Ansprüche 1 oder 2, wobei die Zugangspunkte (2) Umwandlungseinrichtungen (34) umfassen, die die Daten in ein Format umwandeln, das für das IP-Protokoll geeignet ist.

## Revendications

1. Système de télécommunication comprenant un ou plusieurs serveurs (1), un ou plusieurs points d'accès (2) et un ou plusieurs appareils mobiles de communication (3), étant précisé :
que les appareils mobiles (3) communiquent grâce à un client à l'aide d'une technologie sans fil, le système étant apte à attribuer à chaque utilisateur qui utilise l'un au moins des appareils mobiles (3) un numéro d'identification d'utilisateur (UID) unique, lequel numéro d'identification d'utilisateur unique est indépendant du réseau et de l'adresse physique de l'appareil mobile (3) qui est utilisé ;
qu'un canal de communication virtuel est établi entre au moins un serveur (1) et l'appareil mobile (3) utilisé par l'utilisateur, un numéro d'identification de canal virtuel (SID) unique étant associé au canal virtuel, et le numéro d'identification de canal virtuel (SID) étant un numéro aléatoire unique à l'intérieur du système pour la vie entière dudit canal de communication virtuel ;
et que chacun des points d'accès (2) comprend plusieurs unités de réception (31), chaque unité (31) étant utilisée pour recevoir un type différent de communication sans fil ;
**caractérisé en ce que** chacun des points d'accès (2) est apte à mettre à jour une première table qui établit une correspondance entre le numéro d'identification de canal virtuel (SID) et les adresses physiques de tous les appareils mobiles (3) présents à l'intérieur de la zone d'action du point d'accès (2) ;
**en ce que** le serveur (1) est apte à mettre à jour une seconde table qui associe le numéro d'identification d'utilisateur (UID) au numéro d'identification de canal virtuel (SID) et à une liste de points d'accès qui ont dans leurs zones d'action l'appareil mobile (3) utilisé par l'utilisateur ; et
**en ce que** le système est apte à maintenir le canal virtuel actif en cas de migration à l'aide des première et seconde tables.

2. Système de télécommunication tel que revendiqué dans la revendication 1, dans lequel les appareils mobiles (3) communiquent avec les points d'accès (2) grâce à une connexion sans fil, et les points d'accès (2) communiquent avec le serveur (1) grâce à une connexion IP.

3. Système de télécommunication tel que revendiqué dans la revendication 2, dans lequel le numéro d'identification d'utilisateur (UID) ne change pas si l'utilisateur d'un appareil mobile (3) change de point d'accès (2) ave lequel il communique et/ou s'il change de type de connexion sans fil.

4. Système de télécommunication tel que revendiqué dans la revendication 2, dans lequel le canal virtuel reste actif quand l'appareil mobile (3) change de type de technologie de communication sans fil avec le point d'accès (2).

5. Système de télécommunication tel que revendiqué dans la revendication 2, dans lequel le canal virtuel reste actif quand l'appareil mobile (3) passe de la connexion à partir d'un point d'accès (2) à la connexion avec un autre point d'accès (2).

6. Système de télécommunication tel que revendiqué dans la revendication 1, dans lequel le canal virtuel reste actif quand la communication passe d'un appareil mobile (3) à un autre appareil mobile (3).

7. Système de télécommunication tel que revendiqué dans la revendication 1, dans lequel le transport des données utilise l'échange de messages.

8. Système de télécommunication tel que revendiqué dans la revendication 7, dans lequel les messages contiennent un ou plusieurs en-têtes et les données qui doivent être transmises ou reçues.

9. Système de télécommunication tel que revendiqué dans la revendication 7, dans lequel les messages contiennent le numéro d'identification du canal virtuel (SID) et le numéro d'identification de la demande (RID).

10. Système de télécommunication tel que revendiqué dans la revendication 7, dans lequel les messages contiennent la longueur du message lui-même.

11. Système de télécommunication tel que revendiqué dans la revendication 7, dans lequel les messages contiennent le numéro d'identification d'utilisateur (UID) qui les a générés.

12. Système de télécommunication tel que revendiqué dans la revendication 1, dans lequel le point d'accès (2) est pourvu de moyens d'enregistrement qui servent de tampon sur lequel les messages provenant du serveur (1) sont enregistrés au cas où l'appareil mobile (3) auquel les messages sont adressés n'est pas accessible.

13. Système de télécommunication tel que revendiqué dans l'une des revendications 1 ou 2, dans lequel les points d'accès (2) comprennent des moyens de conversion (34) qui convertissent les données en un format adapté au protocole IP.
